# EUROPÄISCHE PATENTSCHRIFT

(11) **EP 1 240 449 B1**
(45) Veröffentlichungstag und Bekanntmachung des Hinweises auf die Patenterteilung: **02.03.2005**
(21) Anmeldenummer: 00981351.0
(22) Anmeldetag: 08.12.2000
(51) Int. Cl.: F16J 15/36

(54) **AXIALKOLBENVERDICHTER FÜR FAHRZEUG-KLIMAANLAGE**
COMPRESSOR WITH AN AXIALLY SLIDING PISTON FOR AN AUTOMOBILE AIR CONDITIONING SYSTEM
COMPRESSEUR A PISTON AXIAL POUR INSTALLATION D'AIR CONDITIONNE DE VEHICULE

(30) Priorität: 14.12.1999 DE 19960284
(43) Veröffentlichungstag der Anmeldung: 18.09.2002
(73) Patentinhaber: Zexel Valeo Compressor Europe GmbH, 68766 Hockenheim (DE)
(72) Erfinder: SCHWARZKOPF, Otfried, 71106 Magstadt (DE)
(74) Vertreter: Popp, Eugen, Dr.
(86) Internationale Anmeldenummer: PCT/EP2000/012411
(87) Internationale Veröffentlichungsnummer: WO 2001/044700

(56) Entgegenhaltungen:
- DE-A- 19 621 174
- GB-A- 388 534
- GB-A- 653 608
- GB-A- 909 395

## Beschreibung

### Stand der Technik

Die Erfindung betrifft einen Axialkolbenverdichter für Fahrzeug-Klimaanlagen gemäß dem Oberbegriff des Patentanspruchs 1.

Nachfolgend wird die Erfindung anhand eines Anwendungsbeispiels für einen solchen offenen Axialkolbenverdichter beschrieben, wie er insbesondere bei einer Klimaanlage für Kraftfahrzeuge verwendet werden kann.

Ein Axialkolbenverdichter einer Kraftfahrzeug-Klimaanlage dient dazu, ein Kältemittel aus einem Wärmeübertrager, in welchem es unter Wärmeaufnahme verdampft, anzusaugen und auf einen höheren Druck zu verdichten, so daß es in einem weiteren Wärmeübertrager die Wärme auf einem höheren Temperaturniveau wieder abgeben kann. Anschließend erfährt das Kältemittel in einem Expansionsorgan eine Drosselung auf das Druckniveau des ersten Wärmeübertragers. Die Funktionsweise solcher Axialkolbenverdichter in einem solchen Kältemittelkreislauf ist allgemein bekannt, so daß sie hier nicht weiter erläutert werden muß.

Ein besonders wichtige Baugruppe eines Axialkolbenverdichters, der bei einer Fahrzeug-Klimaanlage eingesetzt wird, ist die Abdichtung der Antriebswelle. Die Wellenabdichtung eines offenen Verdichters hat eine besondere Bedeutung, da Kältemittelleckagen des Kältekreislaufs, insbesondere eine Kältemittelleckage über die Wellenabdichtung, das Betriebsverhalten der Kälteanlage durch Reduktion der Kältemittelfüllmenge negativ beeinflussen. Außerdem dürfen verschiedene Kältemittel nicht in die Atmosphäre gelangen.

Für die Wellenabdichtung von Axialkolbenverdichtern für das Kältemittel R134a werden üblicherweise Radialwellendichtringe verwendet, die bei den dort auftretenden Druckdifferenzen, gegen die abgedichtet werden muß, eine ausreichend zuverlässige Abdichtung bei geringen Kosten bieten. Ein solcher Radialwellendichtring wird im allgemeinen auf der Außenseite des Gehäuses in einen Einstich eingesetzt.

In jüngster Zeit wird vermehrt der Einsatz des Kältemittels CO₂ als Ersatz für das Kältemittel R134a diskutiert, da CO₂ eine Vielzahl von Vorteilen gegenüber R134a bietet. Aufgrund des höheren Druckniveaus, welches das Kältemittel CO₂ im Vergleich mit R134a erfordert, sind aber technisch anspruchsvollere Abdichtungen erforderlich. Daher werden üblicherweise Axialgleitringdichtungen verwendet, bei denen durch Zusammenwirken von Gleitring und Gegenring, die gegeneinander vorgespannt sind, eine ausreichende Abdichtung gegenüber der hohen Druckdifferenz möglich ist. Die Axialgleitringdichtung kann aber nicht mehr auf der Außenseite des Gehäuses montiert werden, sondern muß im Inneren des Gehäuses, beispielsweise hinter einem Abschlußdeckel, montiert werden. Ferner entsteht durch die Relativdrehung zwischen dem Gleitring und dem Gegenring ein solches Maß an Reibungswärme, daß eine kontrollierte Abfuhr wünschenswert erscheint. Allerdings ist bei Axialkolbenverdichtern für Fahrzeug-Klimaanlagen kein separater Schmiermittelkreislauf vorgesehen, der zur Abfuhr der Reibungswärme im Bereich des Gleitringes verwendet werden könnte, und auch der im Inneren des Gehäuses des Axialkolbenverdichters vorhandene Schmiermittelnebel ist nicht ausreichend, um die auftretende Reibungswärme abzuführen.

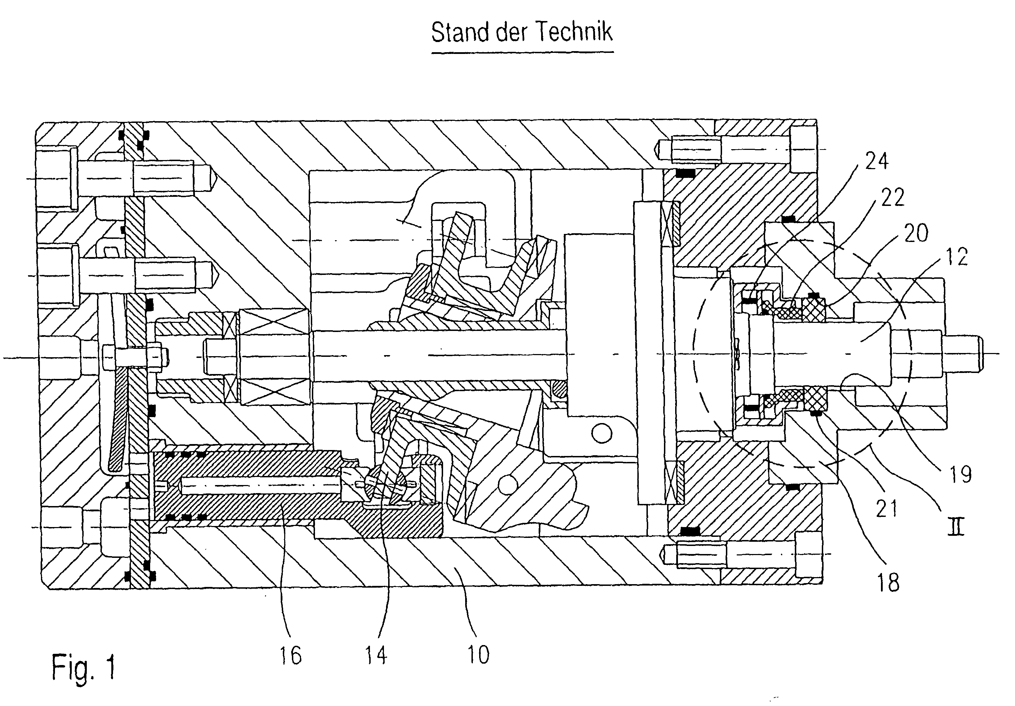

Anhand von Figur 1 wird nachfolgend ein Axialkolbenverdichter beschrieben, der mit einer Axialgleitringdichtung nach dem Stand der Technik versehen ist. Der Axialkolbenverdichter enthält ein Gehäuse 10, in welchem drehbar eine Antriebswelle 12 gelagert ist. Auf der Antriebswelle ist eine Taumelscheibe 14 angebracht, die mit Kolben 16 zusammenwirkt. In Figur 1 ist nur ein einziger Kolben zu sehen; tatsächlich sind bis zu sieben Kolben vorgesehen, die jeweils in einem Zylinder translatorisch verschiebbar sind. Im Bereich des Austritts der Antriebswelle 12 aus dem Gehäuse 10 ist ein Abschlußdeckel 18 vorgesehen, der mit einer Durchtrittsbohrung 19 versehen ist, durch die hindurch die Antriebswelle 12 aus dem Gehäuse 10 austritt. In den Abschlußdeckel ist ein Gegenring 20 mit einem O-Ring 21 eingepreßt. An dem Gegenring 20 liegt ein Gleitring 22 an, der von einer Feder 24 gegen den Gegenring beaufschlagt wird. Auf diese Weise ist eine Axialgleitringdichtung gebildet, die das Gehäuse im Bereich der Durchtrittsbohrung 19 gegenüber dem Außenraum abdichtet. Dabei bilden der Gegenring und der Gleitring die dynamische Dichtung zwischen den sich relativ zueinander drehenden Bauteilen, und die O-Ringe bilden statische Nebendichtungen.

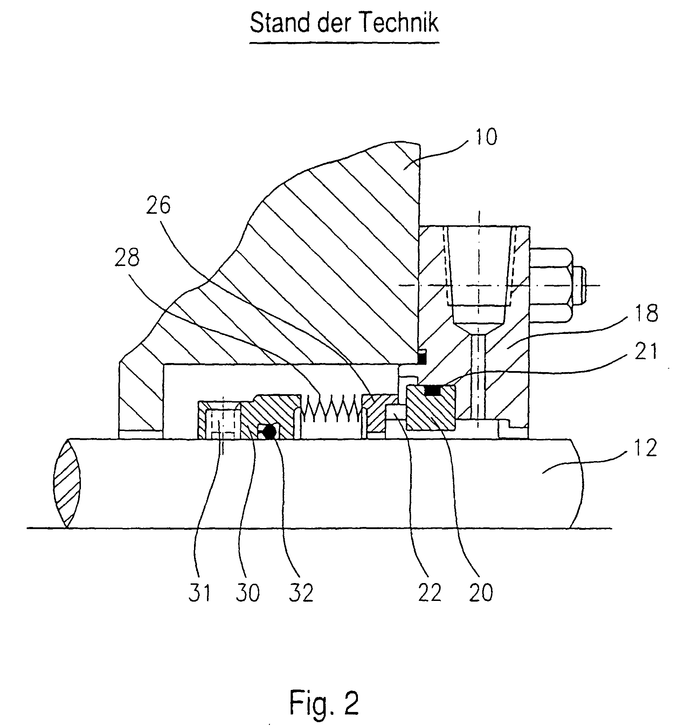

In Figur 2 ist in einem Ausschnitt ein anderer Axialkolbenverdichter mit einer Axialgleitringdichtung nach dem Stand der Technik dargestellt. Auch hier wird ein Gegenring 20 verwendet, der in den Abschlußdeckel 18 eingepreßt ist. Der Gleitring 22 ist in einem Haltering 26 angeordnet, der von einem Metallfaltenbalg 28 gegen den Gegenring 20 beaufschlagt wird. Der Metallfaltenbalg 28 stützt sich an einem Befestigungsring 30 ab, der mittels einer Schraube 31 an der Antriebswelle 12 befestigt ist. Zwischen dem Befestigungsring 30 und der Antriebswelle 12 ist ein O-Ring 32 angeordnet, um die Abdichtung zu gewährleisten. Der Metallfaltenbalg 28 dient bei dieser Ausgestaltung gleichzeitig als Dichtung und als Feder, die den Gleitring 22 gegen den Gegenring 20 beaufschlagt.

Ein gattungsgemäßer Axialkolbenverdichter ist beispielsweise aus der DE 196 21 174 A1 bekannt.

Allen aus dem Stand der Technik bekannten Ausführungsformen ist gemeinsam, daß sie als Dichtring O-Ringe verwenden, die aus einem Elastomer bestehen. Dies ist dann besonders kritisch, wenn der Axialkolbenverdichter als Kältemittel CO₂ verwendet, da ein solcher Axialkolbenverdichter mit einem höheren Druckniveau arbeitet, das zu höheren Belastungen der O-Ringe führt. Auch ergeben sich Probleme mit der Lebensdauer, da die bisher verfügbaren O-Ringe gegenüber CO₂ nicht uneingeschränkt betriebssicher sind. Dies liegt unter anderem an der starken Diffusion des CO₂ in das Elastomer beim vorliegenden hohen Druckniveau und der explosiven Dekompression aufgrund von gegebenen hohen Druckschwankungen. Dies kann auf Dauer zur Zerstörung des Elastomers führen. Ein weiteres Problem bei Axialgleitringdichtungen, die zur Abdichtung O-Ringe verwenden, liegt darin, daß diese Dichtringe die unvermeidlichen kleinen Axialbewegungen des Gleitringes hemmen können. Diese Axialbewegungen ergeben sich zwangsläufig aufgrund von fertigungstechnischen Gegebenheiten und des durch die Toleranzen nie ganz gegebenen 100%igen Planlaufs der Dichtflächen. Der O-Ring könnte die Bewegungen des Gleitringes hemmen, so daß die Abdichtung verschlechtert würde. Ferner beeinträchtigen die auftretenden dynamischen Belastungen des Gleitringes, die auf den O-Ring übertragen werden, dessen Lebensdauer.

Die Aufgabe der Erfindung besteht somit darin, eine Abdichtung zu schaffen, die ohne die eine potentielle Leckagestelle darstellenden O-Ringe auskommt und eine Abdichtung ermöglicht, die auch bei der Verwendung des Kältemittels CO₂ und den damit verbundenen hohen Betriebsdrücken über einen langen Zeitraum zuverlässig abdichtet.

### Vorteile der Erfindung

Bei dem erfindungsgemäßen Axialkolbenverdichter mit den Merkmalen des kennzeichnenden Teils des Patentanspruchs 1 ergibt sich der Vorteil, daß auf O-Ringe aus Elastomer vollständig verzichtet werden kann, so daß die potentielle Leckagestelle Nebendichtung wegfällt. Eine separate Abdichtung für den Gegenring ist nicht mehr erforderlich, da dieser nunmehr unlösbar mit dem Gehäuse verbunden ist. Auch eine separate Abdichtung für den Gleitring ist nicht mehr erforderlich, da dieser nun über den auf eine sich radial erstreckende Membran reduzierten Metallfaltenbalg unmittelbar, also ohne daß ein O-Ring als Nebenabdichtung erforderlich ist, mit der Antriebswelle verbunden ist. Die Erfindung beruht dabei auf der Erkenntnis, daß bei Axialkolbenverdichtern, wie sie in Fahrzeug-Klimaanlagen eingesetzt werden, ein Austausch der Axialgleitringdichtung in Zukunft nicht mehr erforderlich ist; da die Axialgleitringdichtung ein vergleichsweise teures Bauteil darstellt, ist es wirtschaftlich sinnvoller, bei einem Defekt der Axialgleitringdichtung gleich den ganzen Verdichter auszutauschen als eine neue Dichtung zu montieren. Als .weiterer Vorteil ergibt sich ein verringerter Aufwand bei der Montage, weil der Gegenring kein separates Teil mehr ist, das in den Abschlußdeckel eingesetzt werden muß. Daraus folgt wiederum, daß der Gegenring selbst nicht mehr so stabil sein muß, daß er als separates Bauteil handhabbar und auch montierbar sein muß; daher läßt er sich mit einer wesentlich geringeren Dicke ausführen als herkömmliche Gegenringe, die beispielsweise in eine Aufnahme eingepreßt sind. Die geringere Dicke des Gegenringes bietet zwei Vorteile. Zum einen ergibt sich eine geringere Baulänge. Zum anderen wird eine verbesserte Wärmeabfuhr erreicht. Die geringe Dicke des Gegenringes ermöglicht nämlich, trotz der üblicherweise sehr schlechten Wärmeleitfähigkeit des Materials, aus dem solche Gegenringe bestehen, eine ausreichende Wärmeabfuhr dem Bauteil, mit dem er einstückig ausgeführt ist. Die Wärmeleitfähigkeit ist gegenüber Konstruktionen aus dem Stand der Technik auch dadurch verbessert, daß der Gegenring nunmehr unmittelbar mit dem entsprechenden Bauteil verbunden ist und nicht mehr durch eingepreßte O-Ringe partiell gegenüber dem ihn tragenden Bauteil isoliert ist.

Unter dem Begriff "Metallfaltenbalg" wird hier ein Bauteil verstanden, das eine druckdichte und drehfeste Verbindung von seinem einem Rand zu seinem anderen Rand ermöglicht. Dabei ist es prinzipiell unerheblich, wie viele nebeineinanderliegende Wandungsabschnitte der Metallfaltenbalg aufweist. Es bietet sich jedoch bei immer höherem Betriebsdruck ein immer kürzerer. Metallfaltenbalg an. Wird diese Verkürzung des Metallfaltenbalgs weitergeführt, so ergibt sich, wenn der Metallfaltenbalg auf nur einen einzigen Wandungsabschnitt reduziert wird, die erfindungsgemäß sich nur radial erstreckende Membran. Diese Membran ist mit ihrem Innenrand beispielsweise mit der Antriebswelle und mit ihrem Außenrand mit dem Gleitring verbunden.

Gemäß einer Ausführungsform der Erfindung kann der Metallfaltenbalg unmittelbar mit der Antriebswelle verbunden sein, beispielsweise durch Verschweißen, Verlöten oder Verkleben. Auf diese Weise ergibt sich mit minimalem Aufwand unmittelbar eine unlösbare, drehfeste und gasdichte Verbindung mit der Antriebswelle.

Alternativ kann vorgesehen sein, daß der Metallfaltenbalg drehfest und gasdicht mit einem Befestigungsring verbunden ist, der seinerseits drehfest und gasdicht mit der Antriebswelle verbunden ist. Der Befestigungsring kann dabei mit der Antriebswelle verklebt, verlötet oder verschweißt sein, um eine unlösbare Verbindung zu erzielen. Es ist auch möglich, den Befestigungsring auf die Antriebswelle aufzuschrauben. In diesem Fall ist vorzugsweise an der Antriebswelle ein Absatz vorgesehen, an dem der Befestigungsring anliegt. Auf diese Weise ist die Positionierung des Befestigungsrings in axialer Richtung gewährleistet. Bei geeigneter Ausgestaltung des Gewindes ergibt sich eine automatische Abdichtung, ohne daß ein separater Dichtring erforderlich ist. Zusätzlich könnte, falls dies sich als erforderlich herausstellt, ein Metall-Dichtring zwischen dem Absatz der Antriebswelle und dem Befestigungsring angeordnet werden.

Gemäß einer Ausführungsform der Erfindung kann der Gegenring mit dem ihn tragenden Bauteil verklebt, verschweißt oder verlötet sein. Auf diese Weise wird mit geringem Aufwand die gewünschte integrale und gasdichte Verbindung zwischen Gegenring und dem ihn tragenden Bauteil erzielt.

Gemäß einer Ausführungsform ist der Gegenring durch eine Beschichtung gebildet, die auf das entsprechende Bauteil aufgebracht ist, beispielsweise durch ein CVD- oder ein PVD-Verfahren. Auf diese Weise läßt sich ein besonders dünner Gegenring erzielen, was zu einer sehr geringen axialen Baulänge führt. Außerdem ergibt sich eine optimale Wärmeleitung vom Gegenring zum ihn tragenden Bauteil, da keine isolierenden Zwischenschichten vorhanden sind. Ein weiterer Vorteil ist, daß ein Gegenring erhalten werden kann, dessen Oberfläche nicht nachbearbeitet werden muß.

Die Beschichtung ist vorzugsweise eine keramische Beschichtung. Auf diese Weise ergibt sich ein besonders verschleißfester Gegenring. Vorzugsweise wird die keramische Beschichtung nach dem Aufbringen mechanisch nachbearbeitet, um eine Oberfläche mit der gewünschten geringen Rauheit zu bekommen.

Die keramische Beschichtung besteht vorzugsweise aus SiC. Auch Wolframkarbid ist ein geeignetes Material. Es kann dann als Material für den Gleitring imprägnierte Hartkohle verwendet werden, was sich als Reibpaarung bewährt hat. Es wird bei einer solchen Reibpaarung vorzugsweise das Material mit der besseren Wärmeleitfähigkeit, in diesem Fall SiC mit einer Wärmeleitfähigkeit von 125 W/mK, für den Gegenring verwendet wird, der dann aufgrund seiner einstückigen Ausführung mit dem ihn tragenden Bauteil die auftretende Reibungswärme der Axialgleitringdichtung besser abführt als bei einer Gestaltung, bei der die imprägnierte Hartkohle mit einer Wärmeleitfähigkeit von 25 W/mK die Wärmeableitung zum Gehäuse vornehmen müßte.

Gemäß einer bevorzugten Ausgestaltung der Erfindung ist der Gegenring einstückig mit dem Gehäuse ausgeführt, wobei dieses aus Aluminium bzw. einer Aluminiumlegierung besteht. Ein solches Gehäuseteil kann besonders gut mit einer Schicht aus Wolframkarbid beschichtet werden, da die Temperatur des Gehäuseteils während des Beschichtungsvorganges nicht 200°C übersteigt. Als Schichtdicken lassen sich 0,1 mm bis 1 mm erzielen. Durch eine mechanische Nachbearbeitung, beispielsweise durch Schleifen, lassen sich Rauhtiefen Ra von 0,06 mm erreichen. Die Härte einer solchen Schicht beträgt 75-80 HRC.

Gemäß einer weiteren Ausführungsform der Erfindung ist vorgesehen, daß der Gegenring integraler Bestandteil des Gehäuses ist, also durch eine Oberflächenbearbeitung des Gehäuses selbst erhalten wurde. Dies setzt voraus, daß der Abschlußdeckel aus einem Material besteht, das zum Erzielen der Abdichtung im Zusammenwirken mit dem Gleitring geeignet ist. Der Gegenring wird dann ausgebildet, indem ein ringförmiger Bereich des Abschlußdeckels geeignet bearbeitet wird, so daß die erforderliche glatte Oberfläche erzielt wird.

Gemäß der bevorzugten Ausführungsform der Erfindung ist vorgesehen, daß der Gleitring auf seiner mit dem Gegenring zusammenwirkenden Lauffläche mit einer Nut versehen ist. Diese Nut wirkt als Öltasche. Durch die Unterbrechung der Lauffläche des Gleitringes liegen dann quasi zwei Laufflächen in Reihe hintereinander, was die Effizienz der Abdichtung steigert. Alternativ könnte auch der Gegenring mit einer Nut versehen ist. Es ist auch möglich, die Lauffläche des Gegenringes konvex oder konkav auszubilden, um Verformungen durch Wärmeeinwirkung zu berücksichtigen.

Bei einem erfindungsgemäßen Axialkolbenverdichter gemäß Anspruch 26 ergibt sich der Vorteil, daß eine besonders gute Abfuhr der auftretenden Reibungswärme vom Gegenring unmittelbar in das Gehäuse des Verdichters möglich ist. Somit ergibt sich eine geringere Erwärmung der Axialgleitringdichtung, was zu geringeren thermischen und mechanischen Verwerfungen und Verformungen führt. Weiterhin ergibt sich eine vereinfachte Montage, da der Gegenring nicht separat in den Abschlußdeckel eingesetzt werden muß. Unter Abschlußdeckel wird hierbei das Teilstück des Gehäuses verstanden, das mit der Durchtrittsöffnung für die Antriebswelle versehen ist; diese Teilstück kann je nach der konstruktiven Ausgestaltung und der Art der Montage des Verdichters auch das zentrale Teilstück des Gehäuses sein.

Vorteilhafte Ausgestaltungen der Erfindung ergeben sich aus den Unteransprüchen.

### Zeichnungen

Die Erfindung wird nachfolgend unter Bezugnahme auf die beigefügten Zeichnungen beschrieben. In diesen zeigen:
- Figur 1 in einer schematischen Schnittansicht einen Axialkolbenverdichter nach dem Stand der Technik;
- Figur 2 in vergrößertem Maßstab einen weiteren Axialkolbenverdichter nach dem Stand der Technik in einen Ausschnitt entsprechend dem Bereich II von Figur 1;
- Figur 3 in einer Ansicht entsprechend derjenigen von Figur 2 eine Baugruppe eines Axialkolbenverdichters; und
- Figur 4 in einer Ansicht entsprechend derjenigen von Figur 2 eine Baugruppe eines Axialkolbenverdichters.

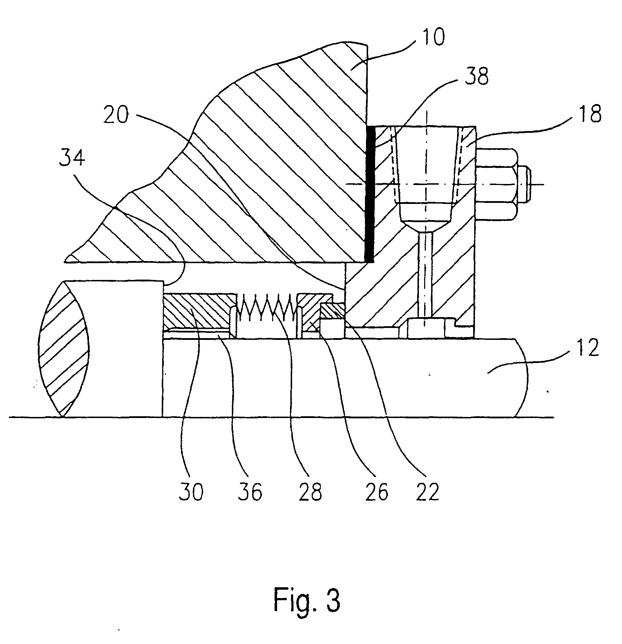

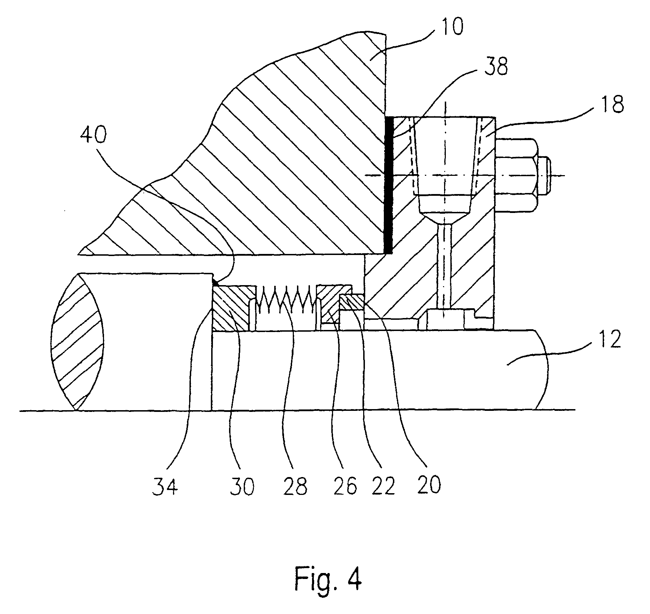

Es wird darauf hingewiesen, daß der Metallfaltenbalg in Figuren 3 und 4 nicht erfindungsgemäß dargestellt ist.

### Beschreibung der Ausführungsbeispiele

In Figur 3 ist eine Baugruppe eines Axialkolbenverdichters gezeigt. Für die Bauteile, die aus den Figuren 1 und 2 bekannt sind, werden dieselben Bezugszeichen verwendet, und es wird auf die obigen Erläuterungen verwiesen.

Die Ausgestaltung gemäß Figur 3 verwendet den aus Figur 2 bekannten Metallfaltenbalg 28, um den Gleitring 22, der in einem Haltering 26 angeordnet ist, gegen den Gegenring 20 zu beaufschlagen. Der Gegenring 20 ist einstückig mit dem Abschlußdeckel 18, der Teil des Gehäuses 10 ist, ausgebildet, und zwar als dünne Schicht aus SiC.

Der Metallfaltenbalg 28 ist mit dem Haltering 26 drehfest und gasdicht verbunden, beispielsweise durch Verschweißen oder Verlöten. An seinem vom Gleitring 22 abgewandten Ende ist der Metallfaltenbalg 28 ebenfalls drehfest und gasdicht mit einem Befestigungsring 30 verbunden, der an einem Absatz 34 der Antriebswelle anliegt. Ferner ist auf der Antriebswelle 12 ein Gewinde 36 vorgesehen, auf das der Befestigungsring 30, der mit einem komplementären Innengewinde versehen ist, aufgeschraubt ist. Das Gewinde ist ein NPTF-Gewinde, das selbstdichtend ist, so daß keine separate Dichtung zwischen der Antriebswelle 12 und dem Befestigungsring 30 erforderlich ist.

Die beschriebene Anordnung gewährleistet eine zuverlässige Abdichtung des Durchtritts der Antriebswelle 12 durch den Abschlußdeckel 18, ohne daß ein O-Ring aus einem Elastomer erforderlich ist. Seitens des Gleitringes 22 ist die Abdichtung entweder durch eine unmittelbare Materialverbindung zwischen zwei aneinander angrenzenden Bauelementen gewährleistet, beispielsweise durch die Verlötung oder Verschweißung des Metallfaltenbalges 28 mit dem Haltering 26 und dem Befestigungsring 30, oder durch die mechanische Abdichtung mittels des Gewindes 36 gegenüber dem Befestigungsring 30. Seitens des Gegenringes 20 ist die Abdichtung durch die unmittelbare Stoffverbindung zwischen der Lauffläche und dem Abschlußdeckel 18 gewährleistet. Die Abdichtung zwischen dem Abschlußdeckel 18 und dem Gehäuse 10 ist schließlich durch eine Metall-Flachdichtung 38 gewährleistet.

In Figur 4 ist eine Baugruppe zur Abdichtung des Wellendurchtritts gemäß einer zweiten Ausführungsform der Erfindung gezeigt. Im Unterschied zu der in Figur 3 gezeigten Ausführungsform ist hier der Befestigungsring 30, der wieder an einem Absatz 34 der Antriebswelle 12 anliegt, mittels einer Schweißnaht 40 unlösbar mit der Antriebswelle 12 verbunden. Somit ist die gewünschte gasdichte und drehfeste Verbindung zwischen dem Befestigungsring 30 und der Antriebswelle 12 gewährleistet.

Allen erfindungsgemäßen Ausführungsformen gemeinsam ist der unlösbar mit dem Gehäuse ausgebildete Gegenring sowie der Metallfaltenbalg 28, der gleichzeitig mehrere Funktionen erfüllt. Zum einen dient er aufgrund seiner Elastizität als Feder, die den Gleitring 22 mit der nötigen Vorspannung gegen den Gegenring 20 beaufschlagt. Weiterhin dient er zur Übertragung der Drehbewegung der Antriebswelle 12 auf den Haltering 26 und somit den Gleitring 22. Schließlich dient er als Abdichtung zwischen dem im Innenraum des Axialkolbenverdichters herrschenden Druck und dem Druck im Außenraum.

Abweichend von den gezeigten Ausführungsformen kann der Metallfaltenbalg 28 auch unmittelbar mit der Antriebswelle drehfest und gasdicht verbunden werden; auf den Befestigungsring 30 kann dann verzichtet werden. Weiterhin ist möglich, auf den separat ausgeführten Abschlußdeckel 18 zu verzichten. Dieser war bisher notwendig, da die Wellenabdichtung der herkömmlichen Axialkolbenverdichter austauschbar war, so daß sie zugänglich sein mußte. Wenn das Erfordernis der Austauschbarkeit fallengelassen wird, kann die Axialgleitringdichtung auch unzugänglich im Inneren des Gehäuses angeordnet sein, wobei das Gehäuse lediglich mit dem geeignet gestalteten Gegenring versehen sein muß.

### Bezugszeichenliste

- 10:: Gehäuse
- 12:: Antriebswelle
- 14:: Taumelscheibe
- 16:: Kolben
- 18:: Abschlußdeckel
- 19:: Durchtrittsbohrung
- 20:: Gegenring
- 21:: O-Ring
- 22:: Gleitring
- 24:: Feder
- 26:: Haltering
- 28:: Metallfaltenbalg
- 30:: Befestigungsring
- 31:: Schraube
- 32:: O-Ring
- 34:: Absatz
- 36:: Gewinde
- 38:: Metall-Flachdichtung
- 40:: Schweißnaht

## Patentansprüche

1. Axialkolbenverdichter für Fahrzeug-Klimaanlagen, bei dem als Kältemittel CO₂ verwendet wird, bestehend aus einer Antriebswelle (12), einem Gehäuse (10) mit einer Durchtrittsbohrung (19), durch die hindurch die Antriebswelle aus dem Gehäuse hervorsteht, einer Axialgleitringdichtung mit Gleitring (22) und Gegenring (20), die zwischen den beiden Bauteilen Antriebswelle und Gehäuse abdichtet, und einen Metallfaltenbalg (28), der den Gleitring gegen den Gegenring beaufschlagt,
**dadurch gekennzeichnet, daß**
der Metallfaltenbalg (28) auf eine sich radial erstreckende Membran reduziert ist, die drehfest und gasdicht mit der Antriebswelle (12) verbunden ist, und daß der Gegenring (20) unlösbar mit dem Gehäuse (10) ausgeführt ist.

2. Axialkolbenverdichter nach Anspruch 1,
**dadurch gekennzeichnet, daß**
der Metallfaltenbalg (28) unmittelbar mit der Antriebswelle (12) verbunden ist.

3. Axialkolbenverdichter nach Anspruch 2,
**dadurch gekennzeichnet, daß**
der Metallfaltenbalg (28) mit der Antriebswelle (12) verschweißt ist.

4. Axialkolbenverdichter nach Anspruch 2,
**dadurch gekennzeichnet, daß**
der Metallfaltenbalg (28) mit der Antriebswelle (12) verlötet ist.

5. Axialkolbenverdichter nach Anspruch 1,
**dadurch gekennzeichnet, daß**
der Metallfaltenbalg (28) drehfest und gasdicht mit einem Befestigungsring (30) verbunden ist, der seinerseits drehfest und gasdicht mit der Antriebswelle (12) verbunden ist.

6. Axialkolbenverdichter nach Anspruch 5,
**dadurch gekennzeichnet, daß**
der Befestigungsring (30) mit der Antriebswelle verklebt ist.

7. Axialkolbenverdichter nach Anspruch 5,
**dadurch gekennzeichnet, daß**
der Befestigungsring (30) mit der Antriebswelle verlötet ist.

8. Axialkolbenverdichter nach Anspruch 5,
**dadurch gekennzeichnet, daß**
der Befestigungsring (30) mit der Antriebswelle verschweißt ist.

9. Axialkolbenverdichter nach Anspruch 5,
**dadurch gekennzeichnet, daß**
der Befestigungsring (30) auf die Antriebswelle aufgeschraubt ist.

10. Axialkolbenverdichter nach einem der Ansprüche 5 bis 9,
**dadurch gekennzeichnet, daß**
die Antriebswelle mit einem Absatz (34) versehen ist, an dem der Befestigungsring (30) anliegt.

11. Axialkolbenverdichter nach Anspruch 10,
**dadurch gekennzeichnet, daß**
zwischen dem Absatz (34) der Antriebswelle und dem Befestigungsring (30) ein Metall-Dichtring angeordnet ist.

12. Axialkolbenverdichter nach einem der Ansprüche 5 bis 11,
**dadurch gekennzeichnet, daß**
der Metallfaltenbalg (28) mit dem Befestigungsring (30) verlötet ist.

13. Axialkolbenverdichter nach einem der Ansprüche 5 bis 11,
**dadurch gekennzeichnet, daß**
der Metallfaltenbalg (28) mit dem Befestigungsring (30) verklebt ist.

14. Axialkolbenverdichter nach einem der Ansprüche 5 bis 11,
**dadurch gekennzeichnet, daß**
der Metallfaltenbalg (28) mit dem Befestigungsring (30) verschweißt ist.

15. Axialkolbenverdichter nach einem der vorhergehenden Ansprüche,
**dadurch gekennzeichnet, daß**
der Gegenring (20) mit dem Gehäuse (10) verklebt ist.

16. Axialkolbenverdichter nach Anspruch 15,
**dadurch gekennzeichnet, daß**
der Gegenring (20) mit dem Gehäuse (10) verschweißt ist.

17. Axialkolbenverdichter nach Anspruch 15,
**dadurch gekennzeichnet, daß**
der Gegenring (20) mit dem Gehäuse (10) verlötet ist.

18. Axialkolbenverdichter nach Anspruch 15,
**dadurch gekennzeichnet, daß**
der Gegenring (20) durch eine Beschichtung gebildet ist, die auf das Gehäuse aufgebracht ist.

19. Axialkolbenverdichter nach Anspruch 18,
**dadurch gekennzeichnet, daß**
die Beschichtung eine CVD-Beschichtung ist.

20. Axialkolbenverdichter nach Anspruch 18,
**dadurch gekennzeichnet, daß**
die Beschichtung eine PVD-Beschichtung ist.

21. Axialkolbenverdichter nach Anspruch 18,
**dadurch gekennzeichnet, daß**
die Beschichtung eine keramische Beschichtung ist.

22. Axialkolbenverdichter nach Anspruch 18,
**dadurch gekennzeichnet, daß**
die Beschichtung aus SiC besteht.

23. Axialkolbenverdichter nach einem der vorhergehenden Ansprüche,
**dadurch gekennzeichnet, daß**
der Gleitring (22) auf seiner mit dem Gegenring (20) zusammenwirkenden Lauffläche mit einer Nut versehen ist.

24. Axialkolbenverdichter nach einem der vorhergehenden Ansprüche,
**dadurch gekennzeichnet, daß**
der Gegenring (20) mit einer Nut versehen ist.

25. Axialkolbenverdichter nach Anspruch 1,
**dadurch gekennzeichnet, daß**
der Gegenring (20) einstückig mit dem Gehäuse (10) ausgeführt ist, wobei dieses aus Aluminium bzw. einer Aluminiumlegierung besteht.

## Claims

1. An axial piston compressor for vehicle climate control systems in which CO₂ is used as a refrigerant, comprised of a drive shaft (12), a housing (10) having a passage bore (19) through which protrudes the drive shaft from the housing, an axial slide-ring seal having a slide-ring (22) and a mating ring (20), which axial slide-ring seal provides for a seal between the two components drive shaft and housing, and a metal bellows (28) forcing the slide-ring against the mating ring,
**characterized in that**
the metal bellows (28) is reduced to a radially extending diaphragm connected for joint rotation and in a gas-tight manner to the drive shaft (12), and the mating ring (20) is a closed construction with the housing (10).

2. The axial piston compressor of claim 1,
**characterized in that**
the metal bellows (28) is directly connected to the drive shaft (12).

3. The axial piston compressor of claim 2,
**characterized in that**
the metal bellows (28) is welded to the drive shaft (12).

4. The axial piston compressor of claim 2,
**characterized in that**
the metal bellows (28) is soldered to the drive shaft (12).

5. The axial piston compressor of claim 1,
**characterized in that**
the metal bellows (28) is connected for joint rotation and in a gas-tight manner to a fastener ring (30), which in turn is connected for joint rotation and in a gas-tight manner to the drive shaft (12).

6. The axial piston compressor of claim 5,
**characterized in that**
the fastener ring (30) is glued with the drive shaft.

7. The axial piston compressor of claim 5,
**characterized in that**
the fastener ring (30) is soldered to the drive shaft.

8. The axial piston compressor of claim 5,
**characterized in that**
the fastener ring (30) is welded to the drive shaft.

9. The axial piston compressor of claim 5,
**characterized in that**
the fastener ring (30) is screwed onto the drive shaft.

10. The axial piston compressor according to any one of claims 5 through 9,
**characterized in that**
the drive shaft is provided with a shoulder (34) on which rests the fastener rings (30).

11. The axial piston compressor of claim 10,
**characterized in that**
a metal ring seal is arranged between the shoulder (34) of the drive shaft and the fastener ring (30).

12. The axial piston compressor according to any one of claims 5 through 11
**characterized in that**
the metal bellows (28) is soldered to the fastener ring (30).

13. The axial piston compressor according to any one of claims 5 through 11,
**characterized in that**
the metal bellows (28) is glued with the fastener ring (30).

14. The axial piston compressor according to any one of claims 5 through 11,
**characterized in that**
the metal bellows (28) is welded to the fastener ring (30).

15. The axial piston compressor according to any one of the preceding claims,
**characterized in that**
the mating ring (20) is glued with the housing (10).

16. The axial piston compressor of claim 15,
**characterized in that**
the mating ring (20) is welded to the housing (10).

17. The axial piston compressor of claim 15,
**characterized in that**
the mating ring (20) is soldered to the housing (10).

18. The axial piston compressor of claim 15,
**characterized in that**
the mating ring (20) is formed by a coating applied to the housing.

19. The axial piston compressor of claim 18,
**characterized in that**
the coating is a CVD coating.

20. The axial piston compressor of claim 18,
**characterized in that**
the coating is a PVD coating.

21. The axial piston compressor of claim 18,
**characterized in that**
the coating is a ceramic coating.

22. The axial piston compressor of claim 18,
**characterized in that**
the coating consists of SiC.

23. The axial piston compressor according to any one of the preceding claims,
**characterized in that**
the slide-ring (22) is provided on its raceway with a groove cooperating with the mating ring (20).

24. The axial piston compressor according to any one of the preceding claims,
**characterized in that**
the mating ring (20) is provided with a groove.

25. The axial piston compressor of claim 1,
**characterized in that**
the mating ring (20) is integrally formed with the housing (10), the latter being made of aluminium or an aluminium alloy.

## Revendications

1. Compresseur à piston axial pour climatiseur de véhicule automobile, dans lequel du CO₂ est utilisé en tant que produit réfrigérant, se constituant d'un arbre d'entraînement (12), d'un boîtier (10) comportant un perçage de traversée (19) au travers duquel l'arbre d'entraînement dépasse du boîtier, un joint d'anneau de glissement axial avec anneau de glissement (22) et contre-anneau (20) réalisant l'étanchéité entre les deux pièces, arbre d'entraînement et boîtier, et un soufflet métallique (28) appliquant l'anneau de glissement contre le contre-anneau,
**caractérisée en ce que**
le soufflet métallique (28) se réduit à une membrane s'étendant dans le sens radial, qui est reliée à l'arbre d'entraînement (12) de façon à ne pas pouvoir pivoter et de façon étanche au gaz, et que le contre-anneau (20) est réalisé de manière inamovible avec le boîtier (10).

2. Compresseur à piston axial selon la revendication 1,
**caractérisée en ce que**
le soufflet métallique (28) est relié directement à l'arbre d'entraînement (12).

3. Compresseur à piston axial selon la revendication 2,
**caractérisée en ce que**
le soufflet métallique (28) est soudé à l'arbre d'entraînement (12).

4. Compresseur à piston axial selon la revendication 2,
**caractérisée en ce que**
le soufflet métallique (28) est brasé à l'arbre d'entraînement (12).

5. Compresseur à piston axial selon la revendication 1,
**caractérisée en ce que**
le soufflet métallique (28) est relié à un anneau de fixation (30) de façon à ne pas pouvoir pivoter et de façon étanche au gaz, qui, de son côté, est relié à l'arbre d'entraînement (12) de façon à ne pas pouvoir pivoter et de façon étanche au gaz.

6. Compresseur à piston axial selon la revendication 5,
**caractérisée en ce que**
l'anneau de fixation (30) est collé à l'arbre d'entraînement.

7. Compresseur à piston axial selon la revendication 5,
**caractérisée en ce que**
l'anneau de fixation (30) est brasé à l'arbre d'entraînement.

8. Compresseur à piston axial selon la revendication 5,
**caractérisée en ce que**
l'anneau de fixation (30) est soudé à l'arbre d'entraînement.

9. Compresseur à piston axial selon la revendication 5,
**caractérisée en ce que**
l'anneau de fixation (30) est vissé sur l'arbre d'entraînement.

10. Compresseur à piston axial selon l'une quelconque des revendications 5 à 9,
**caractérisée en ce que**
l'arbre d'entraînement est pourvu d'un décrochement (34) contre lequel repose l'anneau de fixation (30).

11. Compresseur à piston axial selon la revendication 10,
**caractérisée en ce que**
un anneau d'étanchéité métallique est disposé entre le décrochement (34) de l'arbre d'entraînement et l'anneau de fixation (30).

12. Compresseur à piston axial selon l'une quelconque des revendications 5 à 11,
**caractérisée en ce que**
le soufflet métallique (28) est brasé à l'anneau de fixation (30).

13. Compresseur à piston axial selon l'une quelconque des revendications 5 à 11,
**caractérisée en ce que**
le soufflet métallique (28) est collé à l'anneau de fixation (30).

14. Compresseur à piston axial selon l'une quelconque des revendications 5 à 11,
**caractérisée en ce que**
le soufflet métallique (28) est soudé à l'anneau de fixation (30).

15. Compresseur à piston axial selon l'une quelconque des revendications précédentes,
**caractérisée en ce que**
le contre-anneau (20) est collé au boîtier (10).

16. Compresseur à piston axial selon la revendication 15,
**caractérisée en ce que**
le contre-anneau (20) est soudé au boîtier (10).

17. Compresseur à piston axial selon la revendication 15,
**caractérisée en ce que**
le contre-anneau (20) est brasé au boîtier (10).

18. Compresseur à piston axial selon la revendication 15;
**caractérisée en ce que**
le contre-anneau (20) est constitué d'un enduit appliqué sur le boîtier.

19. Compresseur à piston axial selon la revendication 18,
**caractérisée en ce que**
l'enduit est un enduit CVD.

20. Compresseur à piston axial selon la revendication 18,
**caractérisée en ce que**
l'enduit est un enduit PVD.

21. Compresseur à piston axial selon la revendication 18,
**caractérisée en ce que**
l'enduit est un enduit céramique.

22. Compresseur à piston axial selon la revendication 18,
**caractérisée en ce que**
l'enduit se constitue de SIC.

23. Compresseur à piston axial selon l'une quelconque des revendications précédentes,
**caractérisée en ce que**
l'anneau de glissement (22) est pourvu d'une rainure sur sa surface de déplacement qui agit conjointement avec le contre-anneau (20).

24. Compresseur à piston axial selon l'une quelconque des revendications précédentes,
**caractérisée en ce que**
le contre-anneau (20) est pourvu d'une rainure.

25. Compresseur à piston axial selon la revendication 1,
**caractérisée en ce que**
le contre-anneau (20) est réalisé de façon monobloc avec le boîtier (10), celui-ci étant constitué en aluminium ou en un alliage d'aluminium.
